# Europäisches Patentamt
## European Patent Office
## Office européen des brevets

(11) Veröffentlichungsnummer: **0 046 526**
**B1**

(12) **EUROPÄISCHE PATENTSCHRIFT**

(45) Veröffentlichungstag der Patentschrift:
04.02.87

(21) Anmeldenummer: 81106156.3

(22) Anmeldetag: 06.08.81

(51) Int. Cl.⁴: **B 29 C 43/22**

(54) Verfahren zur kontinuierlichen Herstellung von Bahnen aus thermoplastischen Kunststoffen.

(30) Priorität: 23.08.80 DE 3031839

(43) Veröffentlichungstag der Anmeldung:
03.03.82 Patentblatt 82/9

(45) Bekanntmachung des Hinweises auf die Patenterteilung:
04.02.87 Patentblatt 87/6

(84) Benannte Vertragsstaaten:
AT BE CH DE FR GB IT LI LU NL SE

(56) Entgegenhaltungen:
CH-A-292 879
DE-A-1 479 078
DE-A-2 922 152
DE-B-1 203 939
GB-A-493 541
US-A-2 321 346
US-A-3 223 027
US-A-3 376 187
US-A-3 754 065

(73) Patentinhaber: DYNAMIT NOBEL
AKTIENGESELLSCHAFT, Postfach 1209, D-5210
Troisdorf, Bez. Köln (DE)

(72) Erfinder: Brinkmann, Hans, Stresemannstrasse 5,
D-5210 Troisdorf (DE)
Erfinder: Kraemer, Bernhard, Dr., Kiefernstrasse 7,
D-5210 Troisdorf (DE)
Erfinder: Schulte, Herbert, Ziethenstrasse 22,
D-5210 Troisdorf (DE)
Erfinder: Sommermeyer, Uwe, Telegrafstrasse 250,
D-5210 Troisdorf (DE)

EP 0 046 526 B1

## Beschreibung

Der Gegenstand der Erfindung befaßt sich mit einem Verfahren zur kontinuierlichen Herstellung von Bahnen aus thermoplastischen Kunststoffen, insbesondere als Belagware für das Bauwesen, bei dem der thermoplastische Kunststoff in Gestalt von Teilchen, wie Schnitzel, Krümel, Abschnitte, Stücke, Chips oder dgl. fortlaufend zu einer flächigen Rohmaterialschicht aufgeschüttet, die Rohmaterialschicht erwärmt und unter Anwendung von Druck zu der Bahn verpreßt und verschweißt wird und dann abgekühlt wird.

Ein derartiges verfahren mit den Merkmalen des oberbegriffs des Patentanspruchs 1 ist der Anmelderin bekannt, aber ihres Wissens nicht durch eine vorveröffentlichte Druckschrift belegbar.

Zum Herstellen von in sich gemusterten Bahnen oder Platten aus thermoplastischem Kunststoff ist es weiter bekannt, ein Gemisch von unter sich verschiedenfarbigen Schnitzeln thermoplastischer Mischungen zu einer Bahn oder in eine einfarbige Bahn einer thermoplastischen Mischung aus- bzw. einzuwalzen und dann eine oder mehrere dieser vorgemusterten Bahnen und eine in der Grundfarbe der vorgemusterten Bahn oder Bahnen gehaltene Bahn aus einer damit verträglichen thermoplastischen Mischung durch Druck- und Wärmeeinwirkung miteinander zu vereinigen und die vereinigten Bahnen in warmen Zustand unter Verringerung der Stärke zu kalandrieren. Ein solches Verfahren zum Herstellen eines leitfähigen Fußbodenbelages ist beispielsweise in der DE-AS 19 28 405 beschrieben. Diesem Verfahren haftet jedoch als wesentlicher Nachteil an, daß nur Bahnen mit verhältnismäßig geringer Dicke von wenigen Millimetern hergestellt werden können, da das Walzen von Bahnen mit größeren Dicken über 5 mm wegen der Gefahr von Lunkerbildung d.h. Lufteinschlüssen erhebliche Schwierigkeiten bereitet.

Desweiteren ergibt sich durch die unter Verringerung der Materialstärke erfolgende Kalandrierung zwangsläufig auch eine gerichtete Struktur des Musters der Bahnen in der Kalandrierrichtung und bei starker Kalandrierung besteht überdies die Gefahr, daß sich die Struktur des Musters durch Bildung von Mischfarben mehr oder weniger verwischt. Bei Einsatz von Teilchen mit unterschiedlicher Schmelzviskosität wird dieser Mischfarben- und Vormischungseffekt noch verstärkt.

Zur Herstellung von gemusterten Bahnen aus thermoplastischen Kunststoffen mit nicht gerichteter Musterung hat man daher Techniken unter Vermeidung des Walzens bzw. Kalandrierens als letzten Schritt der Herstellung der Bahnen bzw. Platten entwickelt, wie sie beispielsweise in der DE-OS 14 79 090 und der DE-AS 18 79 822 beschrieben sind. Bei dem zuletzt genannten Verfahren werden thermoplastische Kunststoll-Chips gleichmäßig zu einem fortlaufenden Stapel aulgeschichtet und im Stapel erwärmt woraul der Stapel zu einem Rohblock abgeschnitten und in einer Kastenform verpreßt wird. Aus dem verpreßten Block werden dann die gewünschten Platten geschnitten. Mit diesen Verfahren ist es möglich, gemusterte Platten aus kompaktem thermoplastischem Kunststoff mit nicht orientierter Musterung auch unter Ausbildung nur geringer Anteile von Mischfarben zu erhalten. Nachteilig bei diesen Verfahren ist jedoch die diskontinuierliche Arbeitsweise, die kostenaufwendig ist, die Bereitstellung vieler Pormen und lange Abkühlzeiten der verpreßten Blöcke erfordert und damit keine rationelle Fertigung zuläßt.

Der Erfindung liegt die Aufgabe zugrunde, ein durchgehend kontinuierliches Verfahren zum Herstellen von Bahnen aus thermoplastischen Kunststoffen unter Einsatz von thermoplastischen Kunststoffteilchen zu schaffen, mit dem aufgrund der eingesetzten Teilchen nicht orientierte gemusterte Bahnen auch größerer kompakter Dicke unter Vermeidung von Lufteinschlüssen und von Walz- u. Kalandriervorgängen ermöglicbt wird.

Die Lösung der Aufgabe wird erfingungsgemäß dadurch erreicht, daß die aus den thermoplastischen Kunststoffteilchen aufgeschüttete Rohmaterialschicht eine Heizzon durchläuft und hierbei vorgewärmt und dann kontinuierlich beim Durchlaufen einer Behandlungszone flächig in der Weise abgepreßt wird, daß in sie einer ersten Phase bei Einwirken eines Druckes und Erwärmung auf eine Temperatur im Bereich von 160 bis 200° C verdichtet und verschweißt wird und in einer zweiten, sich direkt anschließenden Phase bei Aufrechterhaltung des Druckes abgekühlt und zugleich auf vorgegebenes Dickenmaß abgepreßt wird. Bevorzugt beträgt die Temperatur der Rohrmaterialschicht nach der Vorwärmung 100-140° C, der Druck beträgt in der ersten Phase der Behandlungszone bevorzugt 10-60 bar. Überraschend gelingt es mit dem erfindungsgsmäßen, durchgehend kontinuierlich ausgestalteten Verfahren Bahnen aus thermoplastischen Kunststoffteilchen in homogener Ausbildung, d.h. kompakt verpreßt und verdichtet auch in Dicken von 1,5 bis 10 mm, vorzugsweise 4 bis 8 mm, herzustellen. Erfindungsgemäß wird eine kontinuierlich fortlaufende Flächenpressung zum Verdichten und Verschweißen der thermoplastischen Kunststoffteilchen zu der Bahn ausgeübt, die die Nachteile de Linienpressung beim Walzen bzw. Kalandrieren von Bahnen vermeidet und auch das bisher übliche diskontinuierliche abschnittweise Abpressen ablöst. Bei dem Verpressen der Teilchen senkrecht zur Fläche der Bahn werden die Teilchen in ihrer Form im wesentlichen erhalten und nur geringfügig verformt, so daß ein überwiegend einseitiger Materialabfluß vermieden wird. Damit bleiben aber auch Ummantelungen der Teilchen erhalten.

Mit dem erfindungsgemäßen Verfahren ist es möglich, daß Teilchen gleicher oder unterschiedlicher Materialzusammensetzung, Teilchenform und Größe und unterschiedlicher Farbgebung kontinuierlich zu Bahnen gewünschter Dicke homogen verpreßt werden. Auch bei unterschiedliche Schmelzviskosität der Teilchen tritt kein nennenswerter Mischfarbeneffekt auf und Konturen bleiben scharf erhalten. Damit sind nicht orientierte Musterungen, wie Marmoreffekte von thermoplastischen Bahnen und zwar durchgehend über die gesamte Bahnbreite und Dicke mit dem erfindungsgemäßen Verfahren herstellbar. Die Teilchen können zusätzlich farbig ummantelt werden, um in der Bahn mustermäßig besser abgegrenzt zu erscheinen. Darüber hinaus ist es auch möglich, die Ummantelung der Teilchen elektrisch leitfähig auszuführen, beispielsweise durch Einsatz von Metallpulver- oder Rußpasten, so daß die fertig verdichtete und gepreßte Bahn eine definierte elektrische Leitfähigkeit aufweist. Ein bevorzugtes Anwendungsgebiet der mit dem erfindungsgemäßen Verfahren hergestellten Bahnen sind gemusterte und/oder leitfähige Beläge für das Bauwesen, insbesondere Bodenbeläge oder dekorative Platten für Boden, Wand und Decke. Das erfindungsgemäße Verfahren kann vorteilhaft bei Einsatz von Teilchen auf Basis eines Vinylpolymsrisates und/oder Copolymeren des Vinylchlorids eingesetzt werden, wie beispielsweise Polyvinylchlorid enthaltend Weichmacher, sowie ggf. weitere Hilfsstoffe wie Stabilisatoren, Pigmente usw., Füllstoffe und ähnliches. Weich-PVC Formmassen werden insbesondere für die Herstellung von Bodenbßlägen eingesetzt. Es können jedoch auch Mischungen von Teilchen aus unterschiedlichen thermoplastischen Kunststoffen oder aber auch Kunststoffmischungen eingesetzt werden, wobei insbesondere thermoplastische Kunststoffe wie Acrylate, Polyester, Athylenvinylacetat usw. zur Anwendung kommen. Eine weitere vorteilhafte Weiterbildung des erfindungsgemäßgen Verfahrens besteht in der Verwendung von Teilchen aus vernetzbaren thermoplastischen Kunststoffen, wie insbesondere Äthylen-Propylen-Copolymere und Äthylen-Propylen ter-Polymere, ggf. in Abmischungen mit weiteren thermoplastischen Kunststoffen. Die Vernetzung wird vorteilhaft mittels Peroxyden bewirkt, jedoch ist auch eine Vernetzung mittels ionisierender Strahlen möglich. Hierbei wird nach einem weiteren Vorschlag der Erfindung so vorgegangen, daß nach dem Verpressen und Verschweißen der Teilchen zu der Bahn die Vernetzung des Kunststoffes entweder innerhalb der Behandlungszone oder nach dem Verlassen der Behandlungszone durchgeführt wird. Die auf diese Weise hergestellten Bahnen haben den Vorteil, daß sie im ersten Verfahrensschritt des homogenen Verpressens und Verschweißens noch von den thermoplastischen Eigenschaften des unvernetzten Kunststoffes Gebrauch machen, während durch die nachfolgende Vernetzung eine entsprechende Erhöhung der gswünschten mechanischen Eigenschaften erzielt wird. Bei diesem kombinierten Verfahren ist darauf zu achten, daß die Temperaturen während des Verpressens und Verschweißens der thermoplastischen Teilchen unterhalb der Anspringtemperatur des eingesetzten und in der Rohmater bzw. den Teilchen enthaltenen Vernetzungsmittels gwhalten werden, um erst eine kompakte homogene Verdichtung und Verschweißung zu erzielen, und durch entsprechende nachfolgende erhöhte Temperaturführung, die am Ende des Verweißvorganes oder aber auch zu einem sehr viel späteren Zeitpunkt vorgenommen werden kann, die Vernetzung des Kunststoffes in der Bahn zu bewirken. Die auf das Dickenmaß abgepreßte Bahn kann in Weiterbildung des erfindungsgemäßen Verfahrens direkt auf eine Temperatur zwischen 50 und 80° C abgekühlt und anschließend gespalten werden, zu gewünschten Fertigbahnen entsprechender Dicke. Beispielsweise ist es möglich, eine abgepreßte Bahn von 5 mm zu drei Bahnen à 2 mm zu spalten oder eine abgepreßte Bahn von 5 mm zu zwei Bahnen à 2,5 mm Das erfindungsgemäße Verfahren ist vorteilhaft bei der Erstellung der Rohmaterialschicht so auszuführen, daß die Teilchen changierend zur gewünschten Dicke und Breite der Hohmaterialschicht aufgetragen werden, wobei ein einziger Auftragsvorgang ausreicht, um das jeweils gewünschte Format der Hohmaterialbahn zu erzielen, wodurch auch die Enddicke der abgepreßten Bahn vorbestimmt ist. Das erfindungsgemäße Verfahren des kontinuierlichen Abpressens der Bahn wird bevorzugt bei Transport (Durchzugs) geschwindigkeiten von 0,5 m/min. bis wenigstens 2,0 m/min. durchgeführt. Es ist jedoch auch möglich, mit dem erfindungsgemäßen Verfahren Verbundbahnen mit einer Trägerbahn oder Verstärkungsbahn herzustellen, in dem die Teilchen zu der Hohmaterialschicht auf einer Trägerbahn, insbesondere textilen Trägerbahn aus Vliesen, Matten, Geweben, Gewirken von mineralischen und/oder Kunststoffasern, wie Glasfasern, Polyesterfasern, Polyamidfasern, aufgetragen und in der Behandlungszone zu einer Verbundbahn verpreßt werden.

Eine bevorzugte Ausführung des erfindungsgemäßen Verfahrens sieht vor, daß die Teilchen zu der Rohmaterialschicht auf ein endlos umlaufendes Unterband aufgetragen und auf diesem vorgewärmt werden und danach die Oberseite der Hohmaterialschicht mit einem endlos umlaufenden Oberband abgedeckt und kontinuierlich durch eine Presse gezogen wird, wobei die Presse im Einlaufbereich beheizt und im Auslaufbereich gekühlt wird. Überraschend gelingt es, mit Doppelbandpressen, wie sie bisher insbesondere in der Herstellung von Spanplatten oder zum Glätten von dünnen Kunststoffolien eingesetzt wurden, thermoplastische Kunststoffteilchen homogen kontinuierlich zu kompakten Bahnen zu verdichten und zu verschweißen. Die Kunststoffteilchen können hierbei mittlere Durchmesser von wenigen Millimetern bis zu 10 und mehr Millimetern aufweisen, während die geringsten Seitenlängen unter 1 mm und die größten Seitenlängen bei 50 und mehr Millimeter betragen können.

Bei dem erfindungsgemäßen Verfahren werden die Kunststoffteilchen lose auf das Unterband aufgetragen und nach eine Vorerwärmung ohne Anwendung von Druck kontinuierlich flächig unter Weiterförderung verdichtet, verschweißt, abgepreßt und abgekühlt. Eine Voraussetzung für die Durchführung des erfindungsgemäßen Verfahrens ist die Verschweißbarkeit der eingesetzten thermoplastischen Kunststoffteilchen. Die für das erfindungsgemäße Verfahren einzusetzenden thermoplastischen Kunststoffteilchen können auf unterschiedliche Weise hergestellt werden. Beispielsweise können unifarbige oder marmorierte Rohfelle durch Walzen hergestellt und anschließend zu Chips geschnitten werden. Es ist auch möglich, Stränge zu extrudieren und in entsprechende Stücke zu unterteilen, wobei unifarbige und marmorierte d.h. mehrfarbig, mehrschichtige Teilchen hergestellt werden können. Es ist auch möglich, Abfallstreifen von kalandrierten, gewalzten thermoplastischen Kunststoffbahnen durch Recycling einzusetzen. Eine vorteilhafte Ausführung sieht vor, daß die thermoplastischen Teilchen in Strangform von verschiedenen Extrudern mittels Düsenwerkzeugen in unterschiedlicher Einfärbung extrudiert und direkt abgeteilt kontinuierlich zum Aufschichten der Rohmaterialschicht zugeführt werden.

Die Ober- und Unterbänder der Presse sind bevorzugt aus Edelstahl ausgeführt und bedürfen keiner besondern Beschichtung um ein Anhaften der thermoplastischen Bahn zu verhindern. Die fertigabgepreßte Bahn kann am Ende der Presse ohne weiteres abgezogen werden. Es besteht jedoch nach einem weiteren Vorschlag der Erfindung die Möglichkeit daß die Rohmaterialschicht beim Durchlaufen der Presse auch an den Seiten durch mitlaufende Bänder abgestützt wird. Bevorzugt wird das Verfahren mit einer als Doppelschwingpresse ausgebildeten Presse mit einer oberen und unteren Pressplatte, wobei eine Pressplatte feststeht und die andere schwingt (vibriert), durchgeführt. Hierbei bilden die Preßplatten die Behandlungszone, d.h. die Preßplatten werden im Einlaufbereich mittels elektrischer Widerstandsheizung auf 160 bis 220° C aufgeheizt und im Auslaufbereich mittels indirekter Kühlung, z.B. in Kanälen in den Preßplatten geführten Wassers von 2o bis 100° C gekühlt. Für den Fall, daß die fertig abgepreßte Bahn direkt anschließend geprägt werden soll, da sie nicht mehr gespalten werden soll, wird erfindungsgemäß vorgeschlagen, daß die Bahn in der Presse nur auf eine Temperatur zwischen etwa 120 und 140° C abgekühlt und anschließend direkt geprägt, beispielsweise mittels eines Prägewalzenpaares wird. Erst danach erfolgt die Abkülung auf Raumtemperatur.

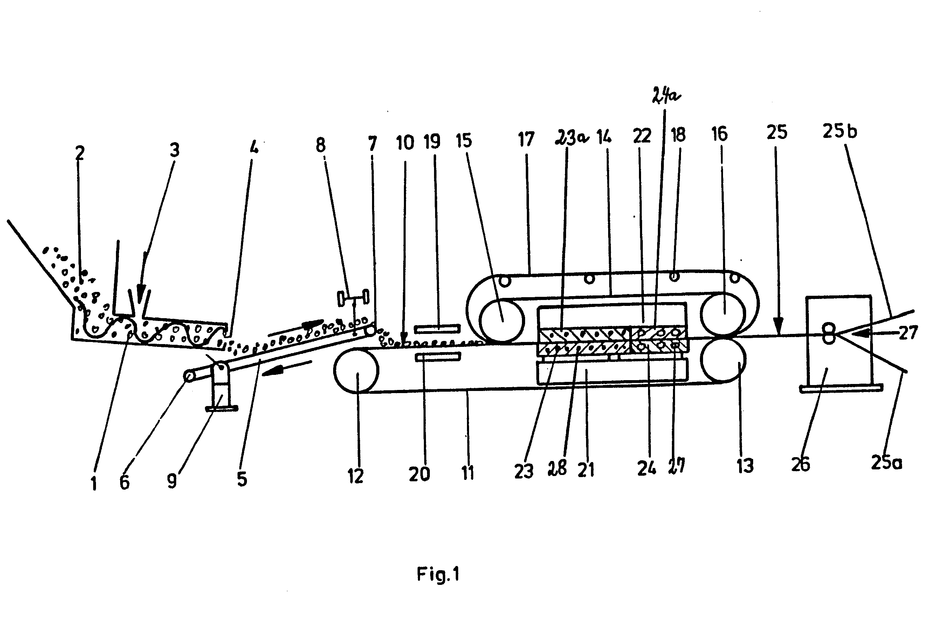

In der beigefügten Zeichnung in Fig. 1 ist schematisch eine Anlage gem. der Erfindung zur Durchführung des erfindungsgemäßen Verfahrens dargestellt. In das Misch- und Förderaggregat 1 werden die thermoplastischen Kunststoffteilchen 2, die beispielsweise auf Walzen, Kalandern, Extrudern vorgefertigt und zerteilt werden, kontinuierlich zugegeben. Das Mischaggregat 1 kann desweiteren einen Einfülltrichter 3 für die Zugabe von Farbpasten oder leitfähigen Pasten für die Ummantelung der Teilchen 2 aufweisen. Am Ende des Mischaggregates 1 werden die Teilchen 2 kontinuierlich aus der Ausgabeöffnung 4 auf das umlaufende Verteilerband 5 gegeben. Das Verteilerband 5 ist einseitig in dem Ständerlager 9 gelagert und wird über die Umlenkrollen 6, 7 geführt. An dem Förderende des Verteilerbandes 5 ist dieses mittels der Schwenkvorrichtung 8 quer zu seiner Förderrichtung schwenkbar mit dem Drehpunkt auf dem Ständerlager geführt. Das Verteilerband 5 wirft die Teilchen 2 kontinuierlich auf das aus der als Doppelkolbenschwingpresse mit den Preßplatten 21, 22 ausgebildeten Presse vorgezogene endlos um die Umlenkrollen 12, 13 umlaufende Unterband 11. Entsprechend der Changierung des Verteilerbandes 5 wird die Rohmaterialschicht 10 in der gewünschten Breite und je nach Geschwindigkeit des Verteilerbandes in der gewünschten Dicke auf das Unterband 11 aufgetragen. Anschließend durchläuft die lose aus Teilchen aufgeschüttete Rohmaterialschicht eine Heizeinrichtung für die Vorwärmung auf 100 bis 140° C, beispielsweise Infrarotstrahler 19 und 20 die auf die Oberseite der Rohmaterialschicht 10 und auf die Unterseite des Unterbandes 11 einwirken. Nach der Aufheizung der Rohmaterialschicht auf die gewünschte Temperatur wird die Rohmaterialschicht 10 der kontinuierlichen Flächenpressung mit Verdichtung und Verschweißung zugeführt. Dieses geschieht in der Doppelkolbenschwingpresse 21, 22 wobei die Rohmaterialschicht auf der Oberseite von dem endlos umlaufenden Oberband 14, das um die Umlenkrollen 15, 16 geführt ist abgedeckt und zwischen Oberband 14 und Unterband 11 in die eigentliche, von den Preßplatten 21, 22 gebildete Schwingpresse eingezogen wird. Die Schwingpresse arbeitet mit einem konstanten Druck, der im Bereich zwischen und 10 und 60 kp/cm² liegt und je nach Material und Dicke der Rohmaterial schicht und Arbeitsgeschwindigkeit d.h. Fördergeschwindigkeit gewählt wird. Die Pressplatten 21, 22 sind jeweils in eine Heizzone 23, 23a und eine Kühlzone 24, 24a unterteilt, wobei der Einzugsbereich der Presse als Heizzone beispiels weise mit elektrischer Widerstandsheizung 28 und der Auslaufbereich als Kühlzone mit Kühleinrichtung 27 für Wasserdurchlauf ausgebildet ist, wobei die Heizzone und die Kühlzone direkt aneinander anschließen und sich ihre Erstrekkung nach den Gegebenheiten richtet. In der Regel wird die Heizzone mindestens die Hälfte der Arbeitslänge der Presse umfassen. Zur seitlichen Begrenzung der Rohmaterialschicht sind die umlaufenden seitlichen Abstützbänder 17, die über Stützrollen 18 geführt werden, vorgesehen. Nach dem Verlassen der Presse wird die fertig abgepreßte Bahn beispiel weise direkt einer Spalteinrichtung 26 mit Spaltmesser 27 zugeführt, wobei sie zu den Teilbahnen 25 a und 25 b gespalten wird. Es ist auch möglich, direkt nachfolgend an die Presse ein Prägewalzenpaar anzuordnen.

Die skizzierte Anlage arbeitet in der Weise, daß die thermoplastischen Teilchen, insbesondere auf Basis von Weich-PVC oder Äthylen-Propylen-Kautschuk, gleichmäßig mit dem Verteilerband 5 auf das vorgezogene Unterband 11 der Presse aufgeschüttet werden. Die aufgeschüttete Rohmaterialschich wird im Durchlauf durch die Vorwärmeeinrichtung auf 100 bis 140°C vorgewärmt und kontinuierlich in die Presse eingefahren. In der Heizzone der Presse wird die Rohmaterialschicht während der Druckbelastung von 10 bis 60 bar im kontinuierlichen Durchlauf bei Materialtemperaturen von 160 bis 180 bzw. 220°C verdichtet, verschweißt und ausgeformt. Im weiteren Durchlauf erfolgt in der Kühlzone der Presse unter Aufrechterhaltung eines konstanten Druckes und zwar des vorangehenden Druckes, die Dickenfixierung der Bahn. Bei Einsatz von Äthylen-Propylen-Kautschuk kann noch in der Presse nach dem Verdichten undVerschweißen der Teilchen während des kontinuierlichen Prozesses eine Vulkanisation d.h. Vernetzung unter Einwirkung des Druckes und der Temperatur ausgelöst werden.

Mit dem erfindungsgemäßen Verfahren ist es möglich, verschweißbare thermoplastische Kunststoffteilchen in unterschiedlicher Stückform, unterschiedlicher Rezeptur und unterschiedlicher Farbgebung kontinuierlich zu homogenen, kompakten Bahnen von 1,5 bis wenigstens 10 mm Dicke zu verpressen. Die Farbummantelung der einzelnen Teilchen bleibt während des Preßvorganges erhalten trotz unterschiedlicher Schmelzviskositäten, die möglicherweise vorhanden sind. Dadurch wird eine Vermischung und Auflösung der Farbummantelung vermieden und am Ende ein orientierungefreies gemuste tes Produkt erhalten, bei dem z.B. die Farbummantelungen der einzelnen Teilchen im Schnitt, beispielsweise bei gespaltenem Material an der gespaltenen Oberfläche als Umrandungen von Einzelteilchen wieder werden. Bei der Durchführung des erfindungsgemäßen Verfahren zum Herstellen der thermoplastischen insbesondere gemusterten und ggf. leitfähigen Bahnen wird auch ein schrumpfarmes Produkt erhalten.

In der gezeigten Anlage gem. Fig. 1 ist beispielsweise auch möglich, an Stelle des gezeigten Mischaggregates 1 eine andere Zuführung der Teilchen 2 zu dem Verteilerband zu wählen. Das Verteilerband 5 hat im wesentlich die Aufgabe, eine gleichmäßige Aufschüttung der Teilchen 2 zu der Rohmaterialscicht in der gewünschten Breite und Höhe vorzunehmen. Auch andere Auftragsarten der Teilchen 2 auf das vorgezogene Unterband 11 der Presse sind im Rahmen der Erfindung möglich. Die hier gezeigte Anlage hat jedoch den Vorteil, mit einem Minimum an maschinentechnischer Ausrüstung eine rationelle Fertigung kontinuierlich des gewünschten Produktes in hoher Qualität zu ermöglichen.

**Beispiel**

Teilchen einer Größe von ca. 30 x 12 x 5 mm, eingefärbt in drei verschiedenen Farben, werden aus einer Formmasse enthaltend 60 Gew.-Teile S-PVG, K.-Wert 68, 20 Gew.-Teile Dioctylphthalat, 20 Gew.-Teile Kreide, 1 Gew.-Teil Farbpigment, 1 Gew.-Teil PVC-Stabilisator hergestellt durch Mischen, Walzen, Zerkleinern. Diese Teilchen werden kontinuierlich zu einer Rohmaterialbahn einer Dicke von 25 mm aufgeschüttet bei einer Kapazität von 400 kg/h und einer Breite der Bahn von 1300 mm. Die Transport- und Durchzugsgeschwindigk. durch die Presse beträgt 0,6 m/min. Nach Vorwärmung der Rohmaterialbahn auf 100°C mittels IR-Strahler wird die Bahn durch die Presse gezogen bei einem Preßdruck von 40 bar und hierbei in der Heizzone der Presse weiter auf 190°C erwärmt und unter Beibehaltung des Drucke in der Kühlzone auf 100°C wieder abgekühlt. Bei einer Länge der Preßplatten = Behandlungszone von 3,4 m, wies die Heizzone eine Länge von 1,5 m auf. Die fertiggepreßte Bahn hatte eine Dicke von 5 mm und wies eine einwandfreie Oberfläche und lunkerfreie Gestalt auf.

**Patentansprüche**

1. Verfahren zur kontinuierlichen Herstellung von Bahnen aus thermoplastischen Kunststoffen, insbesondere als Belagware für das Bauwesen, bei dem der thermoplastische Kunststoff in Gestalt von Teilchen, wie Schnitzel, Krümel, Abschnitte, Stücke, Chips o. dgl. fortlaufend zu einer flächigen Rohmaterialschicht aufgeschüttet, die Hohmaterialschicht erwärmt und unter Anwendung von Druck zu der Bahn verpreßt und verschweißt wird und dann abgekühlt wird, dadurch gekennzeichnet, daß die Rohmaterialschicht eine Heizzone durchläuft und hierbei vorgewärmt und dann kontinuierlich beim Durchlaufen einer Behandlungszone flächig in der Weise abgepreßt wird, daß in einer ersten Phase bei Einwirken eines Druckes und Erwärmung auf eine Temperatur im Bereich von 160° bis 220° die Rohmaterialschicht verdichtet und verschweißt wird und in einer zweiten sich direkt anschließenden Phase bei Aufrechterhaltung des Druckes abgekühlt und zugleich auf das durch die aufgeschüttete Rohmaterialschichtmenge vorgegebene Dickenmaß abgepreßt wird.

2. Verfahren nach Anspruch 1, dadurch gekennzeichnet, daß die Bahn bis auf eine Temperatur etwa im Bereich von 120 bis 140°C abgekühlt und anschließend geprägt wird.

3. Verfahren nach Anspruch 1, dadurch gekennzeichnet, daß die Bahn auf eine Temperatur etwa im Bereich von 50 bis 80°C abgekühlt und anschließend gespalten wird.

4. Verfahren nach einem der Ansprüche 1 bis 3, dadurch gekennzeichnet, daß die Teilchen changierend zur gewünschten Dicke der Rohmaterialschicht aufgetragen werden.

5. Verfahren nach einem der Ansprüche 1 bis 4, dadurch gekennzeichnet, daß Teilchen gleicher oder unterschiedlicher Materialzusammensetzung eingesetzt werden.

6. Verfahren nach einem der Ansprüche 1 bis 5, dadurch gekennzeichnet, daß zumindest ein Teil der Teilchen mit einer farbigen und/oder leitfähigen Ummantelung, beispielsweise auf Basis von Farbmitteln, Rußpasten oder Metallpasten versehen wird.

7. Verfahren nach einem der Ansprüche 1 bis 6, dadurch gekennzeichnet, daß die Teilchen zu der Hohmaterialschicht auf einer Trägerbahn, insbesondere textilen Trägerbahn aus Vliesen, Matten, Geweben, Gewirken von mineralische und/oder Kunststoffasern wie Glasfasern, Polyesterfase Polyamidfasern, aufgetragen und in der Behandlungszone zu einer Verbundbahn verpreßt werden.

8. Verfahren nach einem der Ansprüche 1 bis 7, dadurch gekennzeichnet, daß Teilchen auf Basis eines Vinylpolymerisates und/oder Copolymeren des Vinylchlorids verwendet werden, wie Polyvinylchlorid enthaltend Weichmacher sowie ggf. weitere Hilfsstoffe und Füllstoffe.

9. Verfahren nach einem der Ansprüche 1 bis 8, dadurch gekennzeichnet, daß Teilchen zumindest teilweise enthaltend thermoplastische Kunststoffe wie Acrylate, Polyester, Äthylenvinylacetat, verwendet werden.

10. Verfahren nach einem der Ansprüche 1 bis 7, dadurch gekennzeichnet, daß Teilchen aus vernetzbaren thermoplastischen Kunststoffen, wie Äthylen-Propylen-Copolymere Äthylen-Propylen-Terpolymere, verwendet werden.

11. Verfahren nach Anspruch 10, dadurch gekennzeichnet, daß nach dem Verpressen und Verschweißen der Teilchen zu der Bahn die Vernetzung des Kunststoffes entweder innerhalb der Behandlungszone oder nach Verlassen der Behandlungszone durchgeführt wird.

12. Verfahren nach einem der Ansprüche 1 bis 11, dadurch gekennzeichnet, daß Bahnen einer Dicke von 1,5 bis wenigstens 10 mm hergestellt werden, vorzugsweise einer Dicke von 4 bis 8 mm.

13. Verfahren nach einem der Ansprüche 1 bis 12, dadurch gekennzeichnet, daß die Teilchen zu der Rohmaterialschicht auf ein endlos umlaufendes Unterband aufgetragen und auf diesem vorgewärmt werden und danach die Oberseite der Rohmaterialbahn mit einem endlos umlaufenden Oberband abgedeckt und kontinuierlich durch eine Presse mit einer an dem Oberband anliegenden vorzugsweisen feststehenden Preßplatte und einer an dem Unterband anliegenden vibrierenden Preßplatte gezogen wird, wobei die Preßplatten im Einlaufbereich beheizt und im Auslaufbereich gekühlt werden.

14.Verfahren nach Anspruch 13, dadurch gekennzeichnet, daß die Preßplatten im Einlaufbereich mittels elektrischer Widerstandsheizung auf 160 bis 220°C aufgeheizt werden und im Auslaufbereich mittels in Kanälen der Preßplatten geführten Wassers einer Temperatur zwischen 20 bis 100°C gekühlt werden.

15. Verfahren nach Anspruch 13 oder 14 dadurch gekennzeichnet daß die Rohmaterialschicht beim Durchlaufen der Presse an den Seiten durch mitlaufende Bänder abgestützt wird.

## Claims

1. Process for the continuous production of sheets of thermoplastic plastics material, in particular as covering materials for the building trade, in which the thermoplastic plastics material in the form of particles, such as slices, small crumbs, offcuts, pieces, chips or the like is charged continuously to form a flat layer of starting material, the starting material layer is warmed and pressed with application of pressure to the sheet and fused and then cooled, characterised in that the starting material layer is passed through a heating zone and pre-warmed therein and then is continuously pressed flat as it runs through the treatment zone in such manner that in a first phase the starting material layer is compressed by application of pressure and warming to a temperature in the region of 140 to 220°C and is fused and in a second directly following phase is cooled with maintenance of the pressure and at the same time is pressed to the thick material predetermined by the amount of starting material layer charged.

2. Process according to claim 1, characterised in that the sheet is cooled down to a temperature in the region of about 120 to 140°C and then is embossed.

3. Process according to claim 1, characterised in that the sheet is cooled down to a temperature in the region of about 50 to 80°C and then is split.

4. Process according to one of claims 1 to 3, characterised in that the particles are applied to the desired thickness of the starting material layer to produce a variegated colour effect.

5. Process according to one of claims 1 to 4, characterised in that particles of like or different material composition are employed.

6. Process according to one of claims 1 to 5, characterised in that at least one part of the particles is provided with a coloured and/or conductive coating, for example based on colorants, carbon black paste or metal pastes.

7. Process according to one of claims 1 to 6, characterised in that the particles are applied to the starting material layer on a conveyor belt, in particular textile conveyor belt made of fleeces, mats, webs, woven bodies of mineral and/or plastics fibres such as glass fibres, polyester fibres, polyamide fibres, and are pressed in the treatment zone to a laminated sheet.

8. Process according to one of claims 1 to 7, characterised in that there are used particles based on vinyl polymerisate and/or copolymers of vinylchloride, such as polyvinylchloride-containing plasticisers, as well as optionally further auxiliary materials and fillers.

9. Process according to one of claims 1 to 8, characterised in that there are used particles at least partially containing thermoplastic plastics material such as acrylates, polyesters, ethylene vinylacetate.

10. Process according to one of claims 1 to 7, characterised in that there are used particles made of cross-linkable thermoplastic plastics material, such as ethylene- propylene copolymers, ethylene-propylene terpolymers.

11. Process according to claim 10, characterised in that, after the pressing and welding of the particles to the belt, the crosslinking of the plastics material is either carried out within the treatment zone or after leaving the treatment zone.

12. Process according to one of claims 1 to 11, characterised in that the sheets are produced in a thickness of 1.5 to at least 10 mm, preferably a thickness of 4 to 8 mm.

13. Process according to one of claims 1 to 12, characterised in that the particles are applied to the starting material layer on an endless circulating lower belt and are preheated on this and then the upper side of the starting material sheet is covered with an endless circulating upper belt and is drawn continuously through a press with a preferably fixed pressing plate adjoining the upper belt and a vibrating pressing plate adjoining the lower belt, with the pressing plate being heated in the entry region and cooled in the exit region.

14. Process according to claim 13, characterised in that the pressing plates are heated up to 160 to 220°C in the entry region by means of electrical resistance heating and are cooled in the exit region to a temperature between 10 to 100°C by means of water guided in channels of the pressing plates.

15. Process according to claim 13 or 14, characterised in that the starting material layer is supported at the sides by means of belts travelling with it as it runs through the press.

**Revendications**

1. Procédé pour la fabrication en continu de bandes en matière synthétique thermo-plastique, en particulier comme garnitures pour l'industrie du bâtiment, dans lequel la matière synthétique thermo-plastique, sous forme de particules comme des rognures, des miettes, des tranches, des morceaux, des copeaux, ou équivalentes, est entassée de façon continue en une couche plane de matière première, ladite couche de matière première est chauffée et, par l'emploi de la pression, comprimée en une bande et soudée, puis refroidie, caractérisé par le fait que la couche de matière première traverse une zone de chauffage et est ainsi préchauffée, puis, traversant de façon continue une zone de traitement, est pressée à plat, de telle sorte qui, dans une première phase, par l'action d'une pression et d'un chauffage dans un domaine de température entre 160 et 220 degrés, ladite couche de matière première est comprimée et soudée, et, dans une deuxième phase qui suit immédiatement la première, la pression étant maintenue, ladite couche de matière première est refroidie et en même temps pressée à la valeur de l'épaisseur prédéfinie par la quantité de matière première amassée en couche.

2. Procédé selon la revendication 1, caractérisé par le fait que la bande est refroidie jusqu'à une température d'environ 120 à 140 degrés, et aussitôt après, gaufrée.

3. Procédé selon la revendication 1, caractérisé par le le fait que la bande est refroidie jusqu'à une température d'environ 50 à 80 degrés, et aussitôt après, divisée.

4. Procédé selon l'une quelconque des revendications 1 à 3, caractérisé par le fait que les particules sont déposées en va-et-vient jusqu'à l'épaisseur voulue pour la couche de matière première.

5. Procédé selon l'une quelconque des revendications 1 à 4, caractérisé par le fait que les particules utilisées sont de composition identique ou différente.

6. Procédé selon l'une quelconque des revendications 1 à 5, caractérisé par le fait qu'au moins une partie des particules comporte un enrobage coloré et/ou conducteur, par exemple à base de matières colorantes, de pâte de suie ou de pâte métallique.

7. Procédé selon l'une quelconque des revendications 1 à 6, caractérisé par le fait que les particules sont déposées en une couche de matière première sur une bande support, en particulier une bande support textile, en non-tissés, mats, tissus, tricots, de fibres minérales et/ou synthétiques, telles que fibres de verre, fibres de polyester, fibres de polyamide, puis, dans la zone de traitement, sont pressées en une bande de stratifié.

8. Procédé selon l'une quelconque des revendications 1 à 7, caractérisé par le fait que l'on utilise des particules à base d'un polymère vinylique et/ou de copolymères du chlorure de vinyle, comme adoucissant contenant du polychlorure de vinyle, ainsi que, le cas échéant, d'autres adjuvants et charges.

9. Procédé selon l'une quelconque des revendications 1 à 8, caractérisé par le fait que l'on utilise des particules contenant au moins partiellement des matières synthétiques thermoplastiques comme acrylate, polyester, éthylène/acétate de vinyle.

10. Procédé selon l'une quelconque des revendications 1 à 7, caractérisé par le fait que l'on utilise des particules de matière synthétique thermo-plastique réticulable, comme des copolymères éthylène/propylène, et des terpolymères d'éthylène/propylène.

11. Procédé selon la revendication 10, caractérisé par le fait que, après le pressage et le soudage des particules en une bande, la réticulation de la matière synthétique a lieu soit à l'intérieur de la zone de traitement, soit après la fin du passage dans la zone de traitement.

12. Procédé selon l'une quelconque des revendications 1 à 11, caractérisé par le fait que l'on fabrique des bandes d'une épaisseur de 1,5 à au moins 10 mm, et de prérence d'une épaisseur de 4 à 8 mm.

13. Procédé selon l'une quelconque des revendications 1 à 12, caractérisé par le fait que les particules sont déposées en une couche de matière première sur une bande inférieure tournant sans fin, et sont réchauffées sur celle-ci, et ensuite la face supérieure de la bande de matière première est couverte par une bande supérieure tournant sans fin, et, de façon continue, tirée à travers une presse, une plaque de pression, de préférence fixe, étant ajustée à la bande supérieure, et une plaque vibrante de pression étant ajustée à la bande inférieure, les plaques de pression étant chauffées à l'entrée et refroidies à la sortie de la zone parcourue.

14. Procédé selon la revendication 13, caractérisé par le fait que les plaques de pression sont chauffées à l'entrée de la zone parcourue au moyen d'un chauffage électrique à résistances, à une température de 160 à 220 degrés, et sont refroidies à la sortie de la zone parcourue, à une température comprise entre 20 et 100 degrés, au moyen d'eau circulant dans des canaux à l'inrieur desdites plaques de pression.

15. Procédé selon les revendications 13 ou 14, caractérisé par le fait que la couche de matière première, dans son déplacement dans la presse, est soutenue sur les côtés par des bandes qui se déplacent en même temps qu'elle.

Fig.1